# EUROPÄISCHE PATENTSCHRIFT

(11) **EP 2 197 286 B1**
(45) Veröffentlichungstag und Bekanntmachung des Hinweises auf die Patenterteilung: **22.07.2015**
(21) Anmeldenummer: 08801975.7
(22) Anmeldetag: 10.09.2008
(51) Int. Cl.: A21C 11/10, A21C 11/04

(54) **AUSSTECHWALZE ZUM AUSSTECHEN VON TEIGSTÜCKEN AUS EINER TEIGSCHICHT SOWIE TEIGBEARBEITUNGSANLAGE MIT EINER DERARTIGEN AUSSTECHWALZE**
CUTTER ROLL FOR CUTTING OUT DOUGH PIECES FROM A LAYER OF DOUGH AND DOUGH PROCESSING SYSTEM HAVING SUCH A CUTTER ROLL
ROULEAU PRÉLEVEUR POUR LE PRÉLÈVEMENT DE MORCEAUX DE PÂTE DANS UNE COUCHE DE PÂTE ET ÉQUIPEMENT DE TRAVAIL DE LA PÂTE COMPORTANT UN TEL ROULEAU PRÉLEVEUR

(30) Priorität: 12.09.2007 DE 102007043389
(43) Veröffentlichungstag der Anmeldung: 23.06.2010
(73) Patentinhaber: Werner & Pfleiderer Industrielle Backtechnik GmbH, 71732 Tamm (DE)
(72) Erfinder: HORNA, Marc, D-74360 Ilsfeld (DE); KORBANKA, Matthias, 74081 Heilbronn (DE)
(74) Vertreter: Hofmann, Matthias
(86) Internationale Anmeldenummer: PCT/EP2008/007403
(87) Internationale Veröffentlichungsnummer: WO 2009/033644

(56) Entgegenhaltungen:
- DE-A1- 2 006 956
- DE-A1- 4 423 058
- DE-C- 117 327
- DE-C- 593 501
- DE-C- 823 581
- DE-U1- 7 733 038
- US-A- 5 306 133

## Beschreibung

Die Erfindung betrifft eine Ausstechwalze zum Ausstechen von Teigstücken aus einer Teigschicht nach dem Oberbegriff des Anspruchs 1. Ferner betrifft die Erfindung eine Teigbearbeitungsanlage mit einer derartigen Ausstechwalze.

Eine gattungsgemäße Ausstechwalze ist bekannt aus der DE-PS 1 151 473. Dort ist eine Möglichkeit der Beseitigung des ausgestochenen Teig-Abfalls aus entsprechend gestalteten radialen Bohrungen bzw. Öffnungen einer hohlen Ausstechwalze angesprochen. Die Teig-Abfälle werden durch entsprechende Öffnungen ins Innere der Ausstechwalze hineinverdrängt und seitlich aus der Ausstechwalze durch offen gelassene Stirnenden der Ausstechwalze ins Freie abgeleitet. Als Grund, warum diese Form der Teig-Abfall-Ableitung nicht weiterentwickelt wird, gibt die DE-PS 1 151 473 die Gefahr der Walzenverstopfung an.

Weitere Ausstechwalzen sind bekannt aus der DE 117 327 C und der DE 118 158 A. Die DE 20 06 956 A1 offenbart eine Ausstechwalze mit einer darin angeordneten Fördereinrichtung zum Abtransport von in die Ausstechkörperwalze hineingeblasenen Teigabfälle.

Die DE 117 327 C offenbart eine Ausstechwalze gemäß dem Oberbegriff des Anspruchs 1 und weist einen Ausstechzylinder und eine darin angeordnete Welle mit Schnecke auf, die der lichten Weite des Zylinders angepasst ist. Die Schnecke ist feststehend ausgeführt, um ausgedrückten Teig durch eine seitliche Öffnung des Zylinders abzuführen.

Es ist eine Aufgabe der vorliegenden Erfindung, eine Ausstechwalze der eingangs genannten Art derart weiter zu bilden, dass die Gefahr einer Walzenverstopfung vermindert ist.

Diese Aufgabe ist erfindungsgemäß gelöst durch eine Ausstechwalze mit den im Anspruch 1 angegebenen Merkmalen.

Erfindungsgemäß wurde erkannt, dass eine Walzenverstopfung in der Praxis verhindert werden kann, wenn das Ableiten des Teig-Abfalls aktiv durch eine angetriebene Fördereinrichtung erfolgt. Dies stellt sicher, dass sich in der Ausstechwalze nicht unerwünscht Teig-Abfall bis zur Walzenverstopfung ansammelt. Die Ausstechwalze kann insbesondere als einfach zu wechselnde, über Führungszapfen eingehängte Komponente ausgeführt sein. Der Walzen-Grundkörper selbst ist insbesondere aus Stahl und hat bevorzugt eine Beschichtung aus chemisch Nickel. Wenn der Walzen-Grundkörper aus einem lebensmittelechten Material, beispielsweise aus rostfreiem Stahl, gefertigt ist, kann auf eine Beschichtung des Grundkörpers auch verzichtet werden. Durch den unabhängigen Antrieb der Fördereinrichtung über die Förder-Antriebseinrichtung einerseits und des Walzen-Grundkörpers über den Walzenantrieb andererseits ist gewährleistet, dass die Abförderung der Teig-Abfälle aus dem Inneren des Walzen-Grundkörpers fein an die jeweiligen Betriebsverhältnisse der Ausstechwalze angepasst werden kann. Die Förder-Antriebseinrichtung kann insbesondere so angetrieben sein, dass sich Teig-Abfälle nur bis zu einem bestimmten Volumen im Inneren des Walzen-Grundkörpers ansammeln können, sodass ein störungsfreier Ausstechbetrieb der Ausstechwalze möglich ist. Auch dann, wenn die Ausstechwalze nicht rotiert, kann über die unabhängig angetriebene Fördereinrichtung Teig-Abfall aus der Ausstechwalze gefördert werden. Dies erleichtert beispielsweise die Reinigung der Ausstechwalze und kann ein sicheres Wiederanlaufen der Ausstechwalze gewährleisten.

Eine Förderschnecke als Fördereinrichtung führt zu einer sicheren Ableitung des ins Innere des Walzen-Grundkörpers gelangenden Teig-Abfalls. Der Förderantrieb der Fördereinrichtung ist vom Drehantrieb des Walzen-Grundkörpers zum Ausstechen unabhängig. Die Fördergeschwindigkeit der Förderschnecke ist unabhängig von der Abrollgeschwindigkeit der Ausstechwalze vorgebbar. Die Förderschnecke kann beispielsweise ortsfest bleiben, muss sich relativ zu einem Maschinenrahmen also nicht drehen. Ein angetriebener Teigtransport kann dann durch die sich im Ausstech-Betrieb um die ortsfeste Förderschnecke drehende Innenwand des Walzen-Grundkörpers bewirkt werden. In der Regel wird zur Ableitung des Teig-Abfalls eine drehbar angetriebene Förderschnecke im Inneren der Ausstechwalze eingesetzt.

Abstände zwischen der Umfangswand der Förderschnecke und der Innenwand des Walzen-Grundkörpers haben sich als für einen verschleißarmen Betrieb der Förderschnecke im Walzen-Grundkörper bei gleichzeitig sicherer Mitnahme der Teig-Abfallstücke als besonders geeignet herausgestellt. Bevorzugt liegt der Abstand zwischen der Umfangswand der Förderschnecke und der Innenwand des Walzen-Grundkörpers in einem Bereich zwischen 0,5 und 2 mm und beträgt beispielsweise 1 mm.

Ausstechkörper nach Anspruch 2 ermöglichen einen effizienten Ausstech-Betrieb der Ausstechwalze. Die Kunststoff-Ausstechkörper können ohne Weiteres lebensmittelverträglich ausgeführt werden. Zudem ist es möglich, diese aus einem verschleißarmen Kunststoff zu fertigen. Beim Abrollen der Ausstechwalze auf einer Unterlage, auf der die Teigschicht angeordnet ist, tritt beim Einsatz von Kunststoff-Ausstechkörpern allenfalls ein geringer Verschleiß an den Ausstechkörpern bzw. der Unterlage auf. Die Ausstechkörper können insbesondere als auswechselbare Elemente auf dem Walzen-Grundkörper angeordnet und mit diesem beispielsweise verschraubt sein.

Ausstechkörper mit Ausstechöffnungen nach Anspruch 2 gewährleisten, dass Teig-Abfälle nicht in den Öffnungen in der Mantelwand des Walzen-Grundkörpers hängen bleiben. Dies reduziert zusätzlich die Gefahr einer Verstopfung der Ausstechwalze. Zudem reduziert dies die Gefahr eines unerwünschten Transports von Teig-Abfällen vom Innern der Ausstechwalze nach außen. Die Teig-Abfälle können in den Öffnungen in der Mantelwand des Walzen-Grundkörpers in einem gewissen, gewünschten Ausmaß expandieren. Die Öffnungen im Walzen-Grundkörper müssen der Kontur von Ausstechöffnungen in den Ausstechkörpern nicht exakt entsprechen. Die Öffnungen im Walzen-Grundkörper können lediglich eine angenäherte Kontur der Ausstechöffnungen und damit der auszustechenden Teigstücke aufweisen. Insbesondere ist es möglich, die Öffnungen in der Mantelwand des Walzen-Grundkörpers einteilig auszuführen, während jeder Ausstechkörper mehrere Öffnungen, beispielsweise zum Ausstechen von Brezeln, aufweist.

Eine Höhe der Ausstechkörper nach Anspruch 4 ermöglicht eine stabile Ausgestaltung der Ausstechkörper.

Ein Verhältnis aus einer Hohlzylinder-Wandstärke und einem Außendurchmesser des Walzen-Grundkörpers nach Anspruch 5 stellt sicher, dass eine Säule aus übereinander gestapelten Teig-Abfallstücken nicht übermäßig hoch aufgestapelt ist. Eine unerwünschte Ausweichbewegung von dem Inneren des Walzen-Grundkörpers zugewandten Teig-Abfallstücken nach außen aufgrund einer Kompression des Teiges innerhalb einer derartigen Säule ist dann vermieden. Verhältnisse aus der Hohlzylinder-Wandstärke und dem Außendurchmesser, die kleiner sind als 0,1, haben sich hierfür als zur Sicherstellung einer sicheren Abförderung des Teig-Abfalls als besonders geeignet herausgestellt.

Die Vorteile einer Teigbearbeitungsanlage nach Anspruch 6 entsprechen denjenigen, die vorstehend schon unter Bezugnahme auf die Ausstechwalze diskutiert wurden.

Ausführungsbeispiele der Erfindung werden nachfolgend anhand der Zeichnung näher erläutert. In dieser zeigen:
- Fig. 1: eine perspektivische Ansicht einer Ausstechwalze zum Ausstechen von Teigstücken aus einer Teigschicht;
- Fig. 2: perspektivisch einen Axialschnitt durch einen Walzen-Grundkörper der Ausstechwalze nach Fig. 1;
- Fig. 3: eine Ausschnittsvergrößerung aus Fig. 2 im Bereich einer Mantelwand eines Walzen-Grundkörpers der Ausstechwalze;
- Fig. 4: gegenüber Fig. 1 vergrößert eine perspektivische Ansicht eines Abschnitts der Ausstechwalze im Bereich einer Ableitöffnung für ausgestochenen Teig aus dem Inneren des Walzen-Grundkörpers;
- Fig. 5: einen Axialschnitt durch eine weitere Ausführung einer Ausstechwalze, wobei Antriebskomponenten eines Förderantriebs einerseits und eines Drehantriebs andererseits weggelassen sind; und
- Fig. 6: in einer zu Fig. 3 ähnlichen Darstellung einen Bereich einer Mantelwand eines Walzen-Grundkörpers der Ausstechwalze nach Fig. 5.

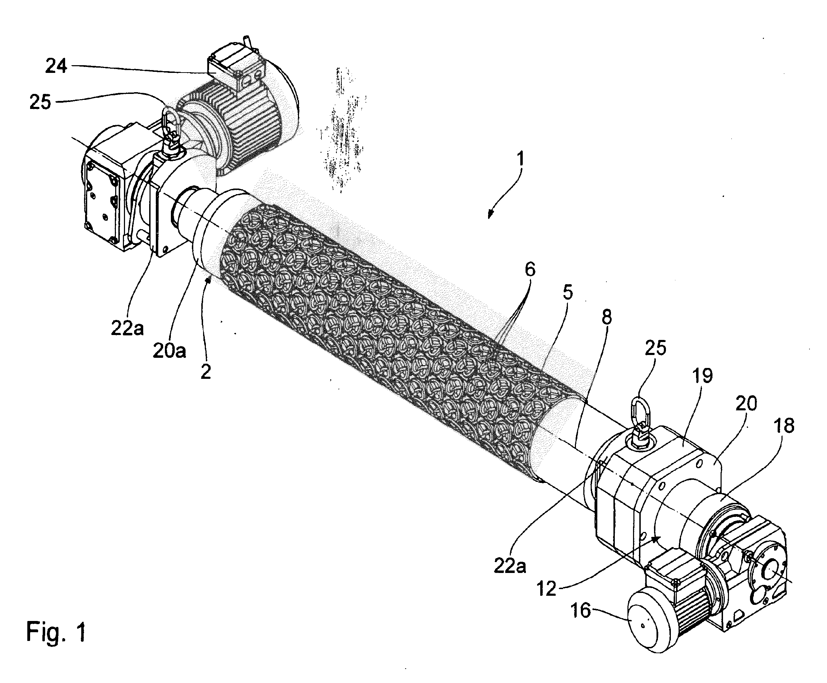

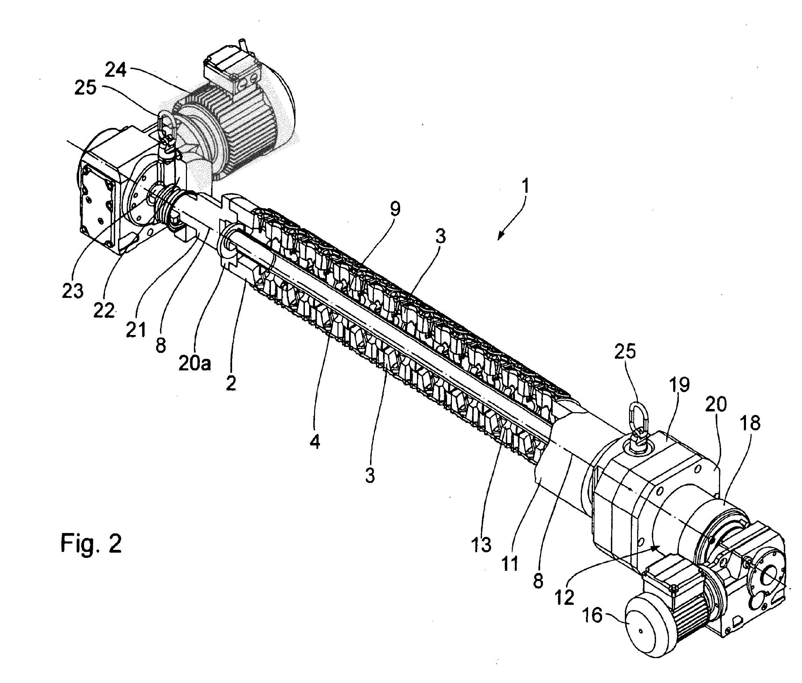

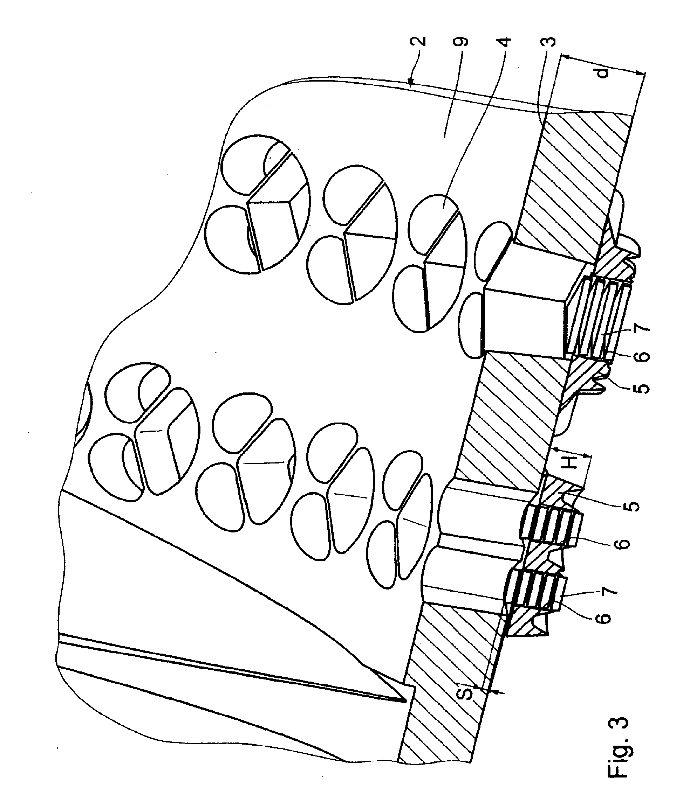

Eine Ausstechwalze 1 dient zum Ausstechen von Teigstücken aus einer Teigschicht. Die in den Fig. 1 bis 4 dargestellte Ausstechwalze 1 dient zum Ausstechen von Teigbrezeln. Dabei rollt ein hohlzylindrischer Walzen-Grundkörper 2 der Ausstechwalze 1 auf der nicht dargestellten, eben laminierten Teigschicht ab. Der Walzen-Grundkörper 2 ist aus Stahl gefertigt und hat in der dargestellten Ausführung eine Beschichtung aus chemisch Nickel. In der Mantelwand 3 des Walzen-Grundkörpers 2, die im Schnitt in der Fig. 2 und vergrößert in der Fig. 3 dargestellt ist, sind Öffnungen 4 ausgebildet, die den auszustechenden Teigstücken entsprechen. Bei der dargestellten Brezel-Variante der Ausstechwalze 1 entspricht die Form der Öffnungen 4 den Brezel-Öffnungen.

Außen auf dem Walzen-Grundkörper 2 sind Ausstechkörper 5 festgelegt, nämlich mit der Mantelwand 3 des Walzen-Grundkörpers 2 verschraubt. Die Ausstechkörper 5 sind aus Kunststoff. In der dargestellten Ausführungsform sind die Ausstechkörper 5 aus Poly-Oxymethylen (POM). Die Ausstechkörper 5 sind entsprechend den auszustechenden Teigstücken geformt, haben also eine äußere Brezel-Form. Ausstechöffnungen 6 in den Ausstechkörpem 5 sind den Öffnungen 4 in der Mantelwand 3 jeweils zugeordnet und fluchten mit diesen. Jeder Ausstechkörper 5 weist entsprechend den Öffnungen einer Brezel drei Ausstechöffnungen 6 auf. Die Ausstechöffnungen 6 der Ausstechkörper 5 haben, wie ein Vergleich der angeschnittenen Ausstechöffnungen 6 in der Fig. 3 mit den Öffnungen 4 der Mantelwand 3 ergibt, eine geringere lichte Weite als die ihnen zugeordneten Öffnungen 4 in der Mantelwand 3 des Walzen-Grundkörpers 2. Alternativ zur Brezel-Form kann der Ausstechkörper 5 auch als Ring oder als Buchstabe ausgeführt werden, so dass Teigstücke in entsprechender Ring- oder Buchstabenform von der Ausstechwalze 1 ausgestochen werden.

Fig. 3 zeigt einen Ausschnitt der Ausstechwalze 1 während des Ausstechbetriebs, wobei ein in der Fig. 3 links geschnitten dargestellter Ausstechkörper 5 fünf Teig-Abfallstücke 7 aus der Teigschicht ausgestochen hat, wobei fünf Umdrehungen der Ausstechwalze 1 um die Längsachse 8 erforderlich waren. Ein in der Fig. 3 rechts geschnitten dargestellter Ausstechkörper 5 hat vier Teig-Abfallstücke 7 aus der Teigschicht ausgestochen, wobei hierzu vier Umdrehungen der Ausstechwalze 1 um die Längsachse 8 erforderlich waren. Die Ausstechkörper 5 haben eine Höhe H über der Mantelwand 3, die einem Mehrfachen der Stärke der auszustechenden Teigschicht entspricht. Dies ist der Fig. 3 entnehmbar, aus der ein Vergleich der Höhe H mit einer Stärke S der Teig-Abfallstücke 7 möglich ist.

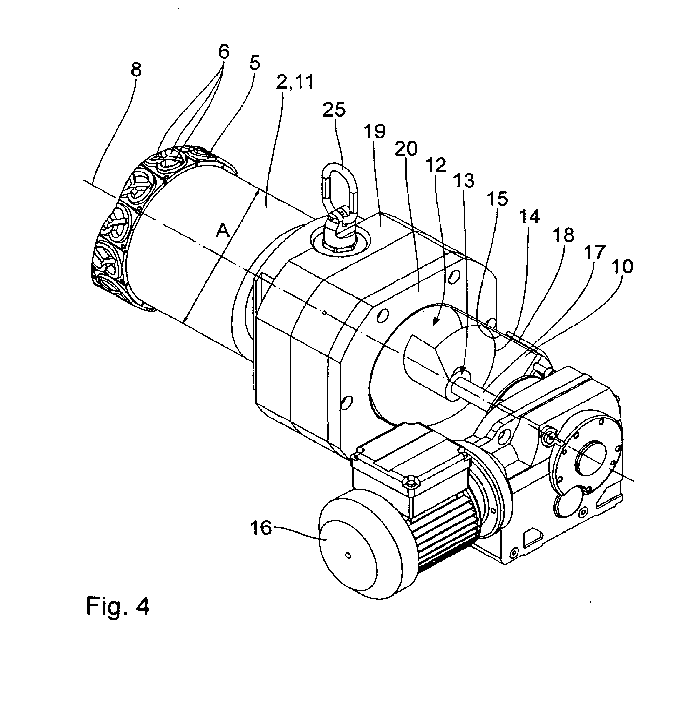

Zum Ableiten der Teig-Abfallstücke 7, also von ausgestochenem Teig-Abfall, vom Inneren 9 des Walzen-Grundkörpers 2 durch eine Ableitöffnung 10 (vgl. insbesondere Fig. 4) an einem stirnseitigen Ende 11 des Walzen-Grundkörpers 2 nach außen dient eine Ableitvorrichtung 12. Letztere hat eine Fördereinrichtung 13 zum Fördern des ausgestochenen Teigabfalls 7 vom Inneren 9 des Walzen-Grundkörpers 2 hin zur Ableitöffnung 10. Die Fördereinrichtung 13 ist als Förderschnecke mit einer koaxial zur Längsachse 8 des Walzen-Grundkörpers 2 verlaufenden Drehachse ausgeführt. Die Förderschnecke 13 ist aus Stahl. Eine äußere Umfangswand 14 der Förderschnecke 13 hält relativ zu einer Innenwand 15 des Walzen-Grundkörpers 2 einen Abstand ein, der bei der dargestellten Ausführung der Ausstechwalze 1 einen Millimeter beträgt. Generell sind Abstände zwischen der Umfangswand 14 und der Innenwand 15 im Bereich zwischen 0,1 mm und 5 mm, bevorzugt zwischen 0,5 mm und 2 mm möglich.

Zur Ableitvorrichtung 12 gehört weiterhin eine Antriebseinrichtung 16 in Form eines Elektromotors zum Förderantrieb der Fördereinrichtung 13. Die Antriebseinrichtung 16 ist kraftschlüssig mit einer zentralen Welle 17 der Förderschnecke 13 verbunden. Die Antriebseinrichtung 16 ist über eine Glocken-Haube 18 mit einem ableitseitigen Rahmenblock 19 der Ausstechwalze verbunden. Hierzu ist die Glocken-Haube 18 einerseits mit der Antriebseinrichtung 16 und andererseits über einen Flansch 20 mit dem Rahmenblock 19 verschraubt.

Am der Antriebseinrichtung 16 gegenüberliegenden Ende ist die Förderschnecken-Welle 17 in einem stirnseitigen Kopfstück 20a des Walzen-Grundkörpers 2 gelagert. Das Kopfstück 20a gibt einen der Ableitseite gegenüberliegenden stirnseitigen Abschluss des hohlen Inneren 9 des Walzen-Grundkörpers 2 vor. Einstückig mit dem Kopfstück 20a verbunden ist ein Wellenstummel 21 der Ausstechwalze 1. Der Wellenstummel 21 ist in einem weiteren Rahmenblock 22 gelagert. Die Rahmenblöcke 19, 22 werden auch als Lagersteine bezeichnet. Die Rahmenblöcke 19, 22 haben vertikale Führungsleisten 22a. Letztere gewährleisten eine definierte Positionierung der Ausstechwalze 1 relativ zum Maschinenrahmen der Teigbearbeitungsanlage. Ein dem Kopfstück 20a gegenüberliegendes Ende 23 des Wellenstummels 21 ist drehfest mit einem Antriebsritzel verbunden. Letzteres wird von einem Walzenantrieb 24 angetrieben, der eine angetriebene Drehung des Walzen-Grundkörpers 2 um die Längsachse 8 zum Ausstechbetrieb der Ausstechwalze 1 ermöglicht.

Die Antriebe 16 und 24 weisen jeweils einen Frequenzumrichter auf.

Im Rahmenblock 19 ist der Walzen-Grundkörper 2 über ein Hohlwellen-Lager gelagert.

Die Ausstechwalze 1 ist Teil einer ansonsten nicht dargestellten Teigbearbeitungsanlage. Die Ausstechwalze 1 ist über Lager- bzw. Hebeösen 25, die fest mit den Rahmenblöcken 19, 22 verbunden sind, in entsprechende Aufnahmen eines Maschinenrahmens der Teigbearbeitungsanlage eingehängt. Durch Aushängen der Lagerösen 25 aus diesen Aufnahmen kann die Ausstechwalze 1 schnell gewechselt werden und beispielsweise gegen eine weitere Ausstechwalze zum Ausstechen anders geformter Teigstücke ausgewechselt werden.

Ein Verhältnis d/A aus einer Hohlzylinder-Wandstärke d des Walzen-Grundkörpers 2 und einem Außendurchmesser A des Walzen-Grundkörpers 2 beträgt bei der Ausführung nach den Fig. 1 bis 4 0,027, ist also kleiner als 0,3.

Beim Ausstech-Betrieb der Teigbearbeitungsanlage rollt die Ausstechwalze 1 auf der synchron mitbewegten Teigschicht in Form eines laminierten Teigbandes ab. Dabei stechen die in die Teigschicht eindringenden Ausstechkörper 5 die gewünschten Teigstücke, im Fall der Ausstechwalze 1 also Brezeln, aus. Das synchrone Mitbewegen des Teigbandes mit dem Abrollen der Ausstechwalze 1 erfolgt derart, dass eine Geschwindigkeitsdifferenz zwischen dem Außenumfang der Ausstechwalze 1 und dem Teigband beim Abrollen verbleibt. Die Ausstechwalze 1 kann dabei entweder etwas schneller oder etwas langsamer rotieren als das Teigband bewegt wird. Dies gewährleistet, verbunden mit einer zumindest abschnittsweise hinterschnittenen Ausführung der Ausstechöffnungen 6, einen Formschlussbeitrag beim Zusammenwirken der Ausstechöffnungen 6 mit dem Teigband, sodass eine sichere Haftung des jeweils neu ausgestochenen Teig-Abfallstücks 7 in der Ausstechöffnung 6 sichergestellt ist.

Teig-Abfallstücke 7 dringen beim Ausstechen durch die Ausstechkörper 5 in die Ausstechöffnungen 6 der Ausstechkörper 5 ein. Mit jeder Umdrehung der Ausstechwalze 1 dringt eine weitere Lage von Teig-Abfallstücken 7 in die Ausstechöffnungen 6 der Ausstechkörper 5 ein. Dies erfolgt so lange, bis die in Bezug auf die Längsachse 8 innersten Teig-Abfallstücke 7 die Ausstechöffnungen 6 in ihrer gesamten Höhe durchtreten haben. Dann dringen diese innersten Teig-Abfallstücke 7 in die den Ausstechöffnungen 6 zugeordneten Öffnungen 4 in der Mantelwand 3 des Walzen-Grundkörpers 2 ein. Da die lichten Weiten der Öffnungen 4 größer sind als die lichten Weiten der zugeordneten Ausstechöffnungen 6, fallen diese innersten Teig-Abfallstücke 7 dann unter Schwerkrafteinfluss durch die Öffnungen 4 ins Innere 9 des Walzen-Grundkörpers 2. Dort werden die Teig-Abfallstücke 7 von der Förderschnecke 13, die von der Antriebseinrichtung 16 in Rotation versetzt ist, erfasst und in Richtung der Ableitöffnung 10 transportiert. Wenn die Teig-Abfallstücke 7 die Ableitöffnung 10 erreicht haben, fallen sie unter Schwerkrafteinfluss in einen vorbereiten Auffangkorb oder auf ein nicht dargestelltes Teig-Förderband, welches die Teig-Abfallstücke 7 der weiteren Verwertung, insbesondere der Teig-Aufbereitung und erneuten Laminierung, zuführt.

Die Förder-Antriebseinrichtung 16 ist als vom Walzenantrieb 24 des Walzen-Grundkörpers 2 unabhängiger Antrieb ausgebildet. Die Fördergeschwindigkeit der Förderschnecke 13 kann also unabhängig von der Abrollgeschwindigkeit der Ausstechwalze 1 vorgegeben werden. Die zum Abfördern der Teig-Abfallstücke 7 optimale Drehgeschwindigkeit der Förderschnecke 13 hängt einerseits von der Abrollgeschwindigkeit der Ausstechwalze 1, andererseits jedoch auch von weiteren Parametern, nämlich beispielsweise dem Verhältnis d/A, den Materialien der Mantelwand 3 und der Förderschnecke 13, sowie dem Abstand der Umfangswand 14 zur Innenwand 15 ab. Über die vom Walzenantrieb 24 unabhängige Förder-Antriebseinrichtung 16 kann die Fördergeschwindigkeit der Förderschnecke 13 entsprechend fein vorgegeben werden.

Nach beendetem Ausstech-Betrieb können Teig-Abfallstücke 7, die in den Ausstechkörpern 5 verblieben sind, mit Hilfe von Druckluft ausgeblasen werden.

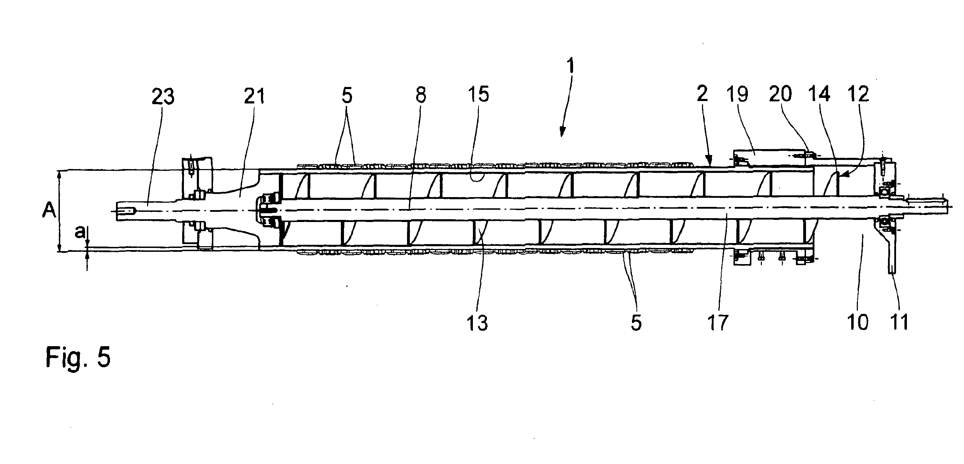

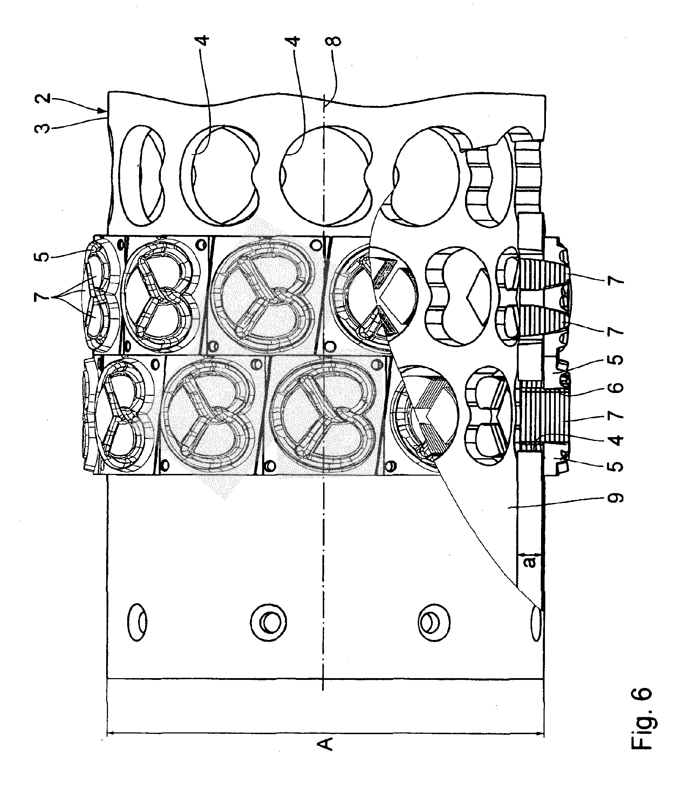

Nachfolgend wird anhand der Fig. 5 und 6 eine weitere Ausführung einer Ausstechwalze 1 erläutert, die alternativ in einer Teigbearbeitungsanlage zum Einsatz kommen kann. Komponenten, die denjenigen entsprechen, die vorstehend unter Bezugnahme auf die Fig. 1 bis 4 bereits erläutert wurden, tragen die gleichen Bezugsziffern und werden nicht nochmals im Einzelnen diskutiert.

Im Unterschied zur Ausführung nach den Fig. 1 bis 4 sind die Öffnungen 4 in der Mantelwand 3 des Walzen-Grundkörpers 2 bei der Ausführung nach den Fig. 5 und 6 nicht als durch Stege unterteilte dreiteilige Öffnungen, sondern als jeweils einer Brezel-Außenkontur angenäherte einteilige Öffnungen ausgeführt. Eine lichte Weite der Öffnungen 4 ist bei der Ausführung nach den Fig. 5 und 6, wie dies auch schon bei der Ausführung nach den Fig. 1 bis 4 der Fall war, größer als eine lichte Weite von Ausstechöffnungen 6 in den Ausstechkörpern 5, wie anschaulich der Querschnittsdarstellung nach Fig. 6 im unteren Bereich entnommen werden kann.

Bei der Ausführung nach den Fig. 5 und 6 ist der Walzen-Grundkörper 2 als dünnwandiger Hohlzylinder ausgeführt. Ein Verhältnis d/A aus einer Hohlzylinder-Wandstärke d des Walzen-Grundkörpers 2 der Ausführung nach den Fig. 5 und 6 und einem Außendurchmesser A dieses Walzen-Grundkörpers 2 beträgt 0,06, ist also kleiner als 0,1.

Beim Ausstech-Betrieb der Teigbearbeitungsanlage mit der Ausstechwalze 1 nach den Fig. 5 und 6 werden die nach mehrfacher Umdrehung des Walzen-Grundkörpers 2 mit den Ausstechkörpern 5 auf dem Teigband in den Ausstechöffnungen 6 und den diese fortsetzenden Öffnungen 4 im Walzen-Grundkörper 2 gestapelten Teig-Abfallstücke 7 von der im Inneren 9 des Walzen-Grundkörpers 2 laufenden Förderschnecke 13 abgestreift. Dies erfolgt bevorzugt dann, wenn sich der Stapel aus Teig-Abfallstücken 7 zum äußeren des Walzen-Grundkörpers 2 hin gegen eine Unterlage, auf der das Teigband gefördert ist, abstützt, die Teig-Abfallstücke 7 also nicht nach außen ausweichen können.

Durch den Wegfall von Zwischenstegen in den Öffnungen 4 in der Mantelwand 3 des Walzen-Grundkörpers 2 bei der Ausführung nach den Fig. 5 und 6 und durch die vergrößerte lichte Weite dieser Öffnungen 4 im Vergleich zu den Ausstechöffnungen 6 ist gewährleistet, dass die Teig-Abfallstücke 7 auf ihrem Weg zum Inneren 9 des Walzen-Grundkörpers 9 hin in einem gewissen Ausmaß frei expandieren können. Dies stellt einerseits eine störungsfreie Förderung der Teig-Abfallstücke 7 von außen nach innen sicher und verhindert andererseits eine unerwünschte Rückförderung der Teig-Abfallstücke 7 von innen nach außen.

## Patentansprüche

1. Ausstechwalze (1) zum Ausstechen von Teigstücken aus einer Teigschicht
- mit einem hohlzylindrischen Walzen-Grundkörper (2), in dessen Mantelwand (3) Öffnungen (4) ausgebildet sind, die den auszustechenden Teigstücken entsprechen,
- mit einer Ableitvorrichtung (12) zum Ableiten von ausgestochenem Teig-Abfall (7) vom Inneren (9) des Walzen-Grundkörpers (2) durch zumindest eine Ableitöffnung (10) an zumindest einem stirnseitigen Ende (11) des Walzen-Grundkörpers (2) nach außen,
- wobei die Ableitvorrichtung (12) eine Förderschnecke (13) mit einer koaxial zum Walzen-Grundkörper (2) verlaufenden Drehachse (8) als Fördereinrichtung umfasst,
**dadurch gekennzeichnet, dass**
- die Fördereinrichtung (13) zum Fördern des ausgestochenen Teig-Abfalls (7) vom Inneren (9) des Walzen-Grundkörpers (2) hin zur Ableitöffnung (10) mittels einer Förder-Antriebseinrichtung (16) angetrieben ist,
- die Förder-Antriebseinrichtung (16) einen Frequenzumrichter aufweist,
- die Förder-Antriebseinrichtung (16) als von einem Walzenantrieb (24) des Walzen-Grundkörpers (2) unabhängiger Antrieb ausgebildet ist, wobei die Fördergeschwindigkeit der Förderschnecke (13) unabhängig von der Abrollgeschwindigkeit der Ausstechwalze (1) vorgebbar ist, und
- eine äußere Umfangswand (14) der Förderschnecke (13) einen Abstand zwischen 0,1 mm und 5 mm von einer Innenwand (15) des Walzen-Grundkörpers (2) einhält.

2. Ausstechwalze nach Anspruch 1, **gekennzeichnet durch** eine Mehrzahl von Ausstechkörpern (5) aus Kunststoff, die außen auf dem Walzen-Grundkörper (2), den Öffnungen (4) in dessen Mantelwand (3) zugeordnet, festgelegt sind und entsprechend den auszustechenden Teigstücken geformt sind.

3. Ausstechwalze nach Anspruch 2, **dadurch gekennzeichnet, dass** die Ausstechöffnungen (6) in den Ausstechkörpern (5) eine geringere lichte Weite haben als die ihnen zugeordneten Öffnungen (4) in der Mantelwand (3) des Walzen-Grundkörpers (2).

4. Ausstechwalze nach Anspruch 2 oder 3, **dadurch gekennzeichnet, dass** die Ausstechkörper (5) eine Höhe (H) über der Mantelwand (3) haben, die einem Mehrfachen der Stärke (S) der auszustechenden Teigschicht entspricht.

5. Ausstechwalze nach einem der Ansprüche 1 bis 4, **gekennzeichnet durch** ein Verhältnis d/A aus einer Hohlzylinder-Wandstärke d des Walzen-Grundkörpers (2) und einem Außendurchmesser A des Walzen-Grundkörpers (2), das kleiner ist als 0,3, insbesondere kleiner ist als 0,1.

6. Teigbearbeitungsanlage mit einer Ausstechwalze (1) nach einem der Ansprüche 1 bis 5.

## Claims

1. Cutter roll (1) for cutting out dough pieces from a layer of dough
- with a hollow cylindrical roll base body (2), in the casing wall (3) of which openings (4) are configured, which correspond to the dough pieces to be cut out,
- with a discharge device (12) for discharging cut-out dough waste (7) from the interior (9) of the roll base body (2) through at least one discharge opening (10) at at least one front end (11) of the roll base body (2) toward the outside,
- wherein the discharge device (12) comprises a screw conveyor (13) with a rotational axis (18) extending coaxially to the roll base body (2) as the conveying mechanism,
**characterised in that**
- the conveying mechanism (13) is driven by means of a conveying drive mechanism (16) for conveying the cut-out dough waste (7) from the interior (9) of the roll base body (2) toward the discharge opening (10),
- the conveying drive mechanism (16) has a frequency converter,
- the conveying drive mechanism (16) is configured as a drive which is independent of a roll drive (24) of the roll base body (2), wherein the conveying speed of the screw conveyor (13) is predeterminable independently of the rolling speed of the cutter roll (1), and
- an outer peripheral wall (14) of the screw conveyor (13) maintains a spacing of between 0.1 mm and 5 mm from an inner wall (15) of the roll base body (2).

2. Cutter roll according to claim 1, **characterised by** a plurality of cutting bodies (5) made of plastics material, which are fixed to the outside of the roll base body (2), associated with the openings (4) in the casing wall (3) thereof, and are formed in accordance with the dough pieces to be cut out.

3. Cutter roll according to claim 2, **characterised in that** the cutting openings (6) in the cutting bodies (5) have a smaller inner width than the openings (4) associated with them in the casing wall (3) of the roll base body (2).

4. Cutter roll according to claim 2 or 3, **characterised in that** the cutting bodies (5) have a height (H) over the casing wall (3), which corresponds to a multiple of the thickness (S) of the layer of dough to be cut out.

5. Cutter roll according to any one of claims 1 to 4, **characterised by** a ratio d/A of a hollow cylinder wall thickness d of the roll base body (2) and an external diameter A of the roll base body (2), which is smaller than 0.3, in particular smaller than 0.1.

6. Dough processing system with a cutter roll (1) according to any one of claims 1 to 5.

## Revendications

1. Rouleau préleveur (1) pour le prélèvement de morceaux de pâte dans une couche de pâte
- avec un corps de base de rouleau (2) en forme de cylindre creux, où des orifices (4), qui correspondent aux morceaux de pâte à prélever, sont façonnés dans la paroi d'enveloppe (3),
- avec un dispositif de déviation (12) pour dévier les résidus de pâte (7) prélevés de l'intérieur (9) du corps de base de rouleau (2) par au moins un orifice de déviation (10) sur au moins une extrémité (11) frontale du corps de base de rouleau (2) vers l'extérieur,
- dans lequel le dispositif de déviation (12) comprend une vis sans fin de transport (13), avec un axe de rotation (8) s'étendant de manière coaxiale par rapport au corps de base de rouleau (2), servant de dispositif de transport,
**caractérisé en ce que**
- le dispositif de transport (13) pour le transport des résidus de pâte (7) prélevés de l'intérieur (9) du corps de base de rouleau (2) vers l'orifice de déviation (10) est entraîné au moyen d'un système d'entraînement de transport (16),
- le système d'entraînement de transport (16) présente un variateur de fréquence,
- le système d'entraînement de transport (16) est conçu sous la forme d'un entraînement indépendant de l'entraînement de rouleau (24) du corps de base de rouleau (2), où la vitesse de transport de la vis sans fin de transport (13) peut être prédéfinie de manière indépendante par rapport à la vitesse de déroulement du rouleau préleveur (1), et
- une paroi (14) extérieure de la vis sans fin de transport (13) maintient une distance entre 0,1 mm et 5 mm avec la paroi interne (15) du corps de base de rouleau (2).

2. Rouleau préleveur selon la revendication 1, **caractérisé par** une multiplicité de corps de prélèvement (5) en matière plastique, qui sont implantés à l'extérieur sur le corps de base de rouleau (2), auxquels sont associés des orifices (4) dans la paroi d'enveloppe (5), et sont qui formés pour correspondre aux morceaux de pâte à prélever.

3. Rouleau préleveur selon la revendication 2, **caractérisé en ce que** les orifices de prélèvement (6) dans les corps de prélèvement (5) ont une largeur interne plus faible que les orifices (4) qui leur sont associés dans la paroi d'enveloppe (3) du corps de base de rouleau (2).

4. Rouleau préleveur selon les revendications 2 ou 3, **caractérisé en ce que** les corps de prélèvement (5) ont une hauteur (H) au dessus de la paroi d'enveloppe qui correspond à une couche de pâte à prélever équivalente à plusieurs fois l'épaisseur (S).

5. Rouleau préleveur selon l'une des revendications 1 à 4, **caractérisé par** un rapport d/A, de l'épaisseur de la paroi en cylindre creux d du corps de base de rouleau (2) et d'un diamètre extérieur A du corps de base de rouleau (2), qui est inférieur à 0,3, en particulier, inférieur à 0,1.

6. Equipement de travail de la pâte doté d'un rouleau préleveur (1) selon l'une des revendications 1 à 5.
